# EUROPEAN PATENT SPECIFICATION

(11) **EP 1 995 865 B1**
(45) Date of publication and mention of the grant of the patent: **02.07.2014**
(21) Application number: 06733196.7
(22) Date of filing: 08.02.2006
(51) Int. Cl.: H02P 6/14, H02P 6/20, H02P 6/18

(54) **METHOD FOR CONTROLLING AN AC ELECTRONIC MOTOR AND DEVICE FOR CARRYING OUT SAID METHOD**
VERFAHREN ZUR STEUERUNG EINES ELEKTRONISCHEN WECHSELSTROMMOTORS UND EINRICHTUNG ZUM AUSFÜHREN DES VERFAHRENS
PROCÉDÉ DE COMMANDE D'UN MOTEUR C.A. ÉLECTRONIQUE ET DISPOSITIF DE SA MISE EN OEUVRE

(43) Date of publication of application: 26.11.2008
(73) Proprietor: Oilfield Equipment Development Center Limited, Mahe Victoria (SC)
(72) Inventor: SAGALOVSKIIY, Andreiy Vladimirovich, Moscow, 121609 (RU); ARANSON, Juliiy Abelevich, Moscow, 127006 (RU); SAGALOVSKIIY, Vladimir Iosifovich, Moscow, 123060 (RU); GMYZINA, Ol'ga Nikolaevna, Moscow, 123056 (RU); SHKAD', Dmitriiy Aleksandrovich, Moscow, 127549 (RU)
(74) Representative: Shanks, Andrew
(86) International application number: PCT/RU2006/000048
(87) International publication number: WO 2007/091910

(56) References cited:
- EP-A2- 0 735 662
- RU-C1- 2 150 780
- RU-C2- 2 207 700
- RU-C2- 2 207 700
- US-A1- 2004 263 113
- US-B1- 6 326 760

## Description

### Technical Field to which the Invention relates

The invention relates to the field of electrical engineering, namely to methods of controlling an electric motor, and it can be used, in particular, for controlling a submersible electric motor used for driving a submersible pump for use in the petroleum industry for the recovery of petroleum.

### Prior Art

A method of controlling an electric motor is known, which is carried out in the electric motor to be controlled and which consists in starting the electric motor in a synchronous mode and rotating the rotor in a valve mode in accordance with EMF signals in current-free sections of an armature winding (USSR Author's Certificate 1774455, Cl. H 02 P 6/02, 1992).

A drawback of the known method is the poor degree of accuracy in determining the power key switching time, which leads to a reduction in the performance and service life of the electric motor.

A method is also known of controlling an electric motor, the sections of the armature winding of which are joined to form a "star" and are connected to the outputs of a full-wave frequency converter in the form of a three-phase bridge with bypass diodes, including starting and rotating the rotor in accordance with EMF signals in current-free sections of the armature winding, converting the EMF signals into discrete logic level signals by a normalizer, delivering the discrete signals to the inputs of a microcontroller, determining the switching times of the sections of the armature winding with respect to the transition times through zero EMF of the free sections by the microcontroller in accordance with a mathematical model of a given type of electric motor (Radim Vi 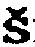 inka, Leo 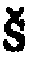 Chalupa, Ivan Skalka. "Systems of controlling an electric motor on microcontrollers of the firm MOTOROLA", the journal "CHIP NEWS: digital control of the electric drive", No. 1, 1999, pp. 14 to 16).

A drawback of the known method is the absence of correction of the switching time in a manner dependent upon the magnitude of the load current, the rotational speed of the motor and the inductance of the motor with a supply cable during the operation of the motor and, as a result, the impossibility of controlling an electric motor having windings of higher inductance.

Closer to the disclosed technical solution in terms of the combination of essential features and the technical result to be achieved, is a method of controlling an electric motor, the sections of the armature winding of which are joined to form a "star" and are connected to the outputs of a full-wave frequency converter designed in the form of a three-phase bridge with bypass diodes, including starting and rotating the rotor in accordance with EMF signals in current-free sections of the armature winding, converting the EMF signals into discrete logic level signals by a normalizer, delivering the discrete signals to the inputs of a microcontroller, determining the switching times of the sections of the armature winding with respect to the transition times through zero EMF of the free sections by the microcontroller in accordance with a mathematical model of the given type of electric motor and shifting the switching moment with respect to the transition times through zero EMF of the free sections in a manner dependent upon the magnitude of the load current, the rotational speed of the rotor and the inductance of the sections of the armature winding, in which case the flow time of the current through the bypass diode of the three-phase bridge is used for an integral estimation of the flow values of the load current, the rotational speed of the rotor and the inductance of the sections of the armature winding. A device for carrying out this method comprises a full-wave frequency converter designed in the form of a three-phase bridge with bypass diodes, a microcontroller and a normalizer, comprising a divider and a comparator unit having two reference level inputs (*cf.* Patent RU 2207700 C2, publ. 27.06.2003, Int.Publ.Cl.⁷ H02P 6/00, H02P 6/18, H02K 29/00, H02K 29/06).

A drawback of the given method is the limitation of the shift of the switching times by the EMF transition time of the zero free phase, this amounting to 30 electrical degrees, and, with respect to the delay of the normalizer filter and the calculation time of the switching times by the processor to be used after the intersection of the EMF of the zero free phase and of the occupying 10 to 15 electrical degrees (depending upon the frequency of rotation), the magnitude of the shift of the switching times to be achieved is in practice 15 to 20 electrical degrees.

As a result of the given deficiency, there is a reduction in the degree of efficiency of the electric motor and it is not possible to control electric motors with large distortion factors of the electromagnetic field which require a shift in switching to angles of more than 20 electrical degrees.

### Disclosure of the invention

The object which the invention applied for aims to achieve is to provide an effective method of controlling various types of electric motors.

The technical result attained when the object posed is achieved consists in increasing the degree of efficiency of the electric motor and the possibility of controlling the electric motor with a large distortion factor of the electromagnetic field.

According to an aspect of the present invention there is provided a method of AC converter-fed motor control using star armature coils connected to a full-wave frequency converter comprising a three-phase reverse diode bridge, the method comprising controlling start-up and rotation utilising EMF signals induced in current-free armature coils conditioned by a normalizer and transformed to logical signals, and inputting the logical signals to a microcontroller for effecting control according to an electrical motor mathematical model in which a switching time for a current-free armature coil is shifted with respect to a time when an EMF signal induced in the current-free armature coil crosses a non-zero reference voltage level that is earlier than the time at which the EMF signal crosses the zero voltage level and is compliant to the rotor angle specified for this kind of motor, wherein the shift of the shifted switching time is determined in dependence on values of load current, rotor speed and armature coil inductance and a time period within which a current is transmitted under influence of the back-EMF over the frequency converter reverse diode following disconnection of the armature coil from the power source is used for estimation of the load current, rotor speed and armature coil inductance values.

According to an aspect of the present invention there is provided an AC converter-fed motor control device comprising a full-wave frequency converter comprising a three-phase reverse diode bridge, the device comprising means for controlling start-up and rotation utilising EMF signals induced in current-free armature coils, a normalizer conditioning and transforming the signals to logical signals, and a microcontroller for receiving the logical signals and for effecting control according to an electrical motor mathematical model in which a shifted switching time for a current-free armature coil is determined by time shifting with respect to a time when an EMF signal induced in the current-free armature coil crosses a non-zero reference voltage level that is earlier than the time at which the EMF signal crosses the zero voltage level and is compliant to the rotor angle specified for this kind of motor, wherein the shift of the switching time is determined in dependence on values of the load current, rotor speed and armature coil inductance, wherein the time interval within which a current is transmitted under influence of the back-EMF over the frequency converter reverse diode following disconnection of the armature coil from the power source is used for estimation of the load current, rotor speed and armature coil inductance values.

The presence of the unit for shifting the reference level in the device allows the calculation and shifting of the switching times to be carried out with respect to the transition of the EMF of free voltage level sections different from zero, and this allows large shift angles of the switching times to be achieved, which in turn makes it possible for the degree of efficiency of the electric motor to be increased and for different types of electric motors to be controlled, including electric motors with a large distortion factor of the electromagnetic field.

The invention is explained by the following illustrative materials:

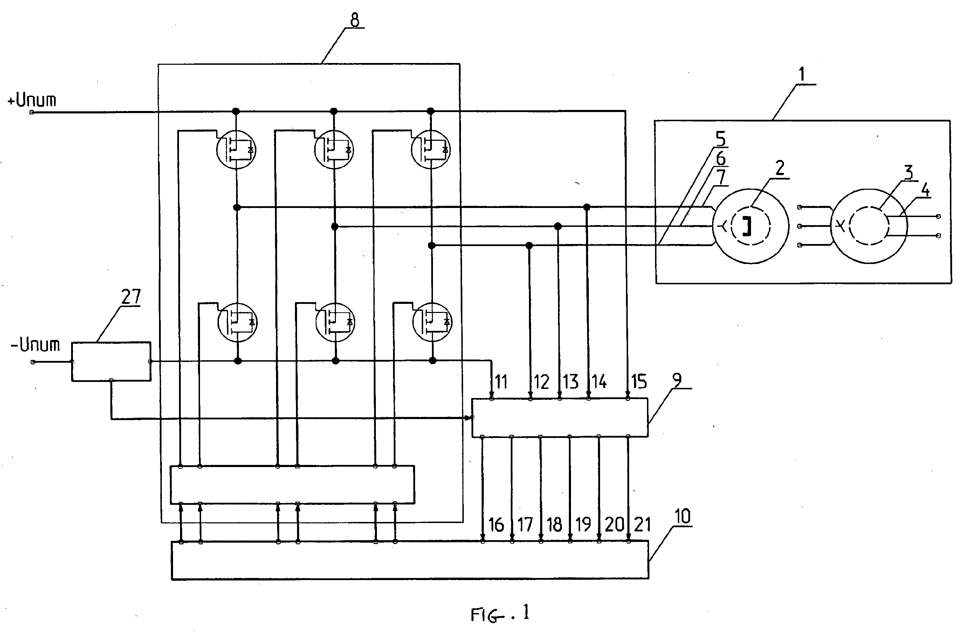

- Fig. 1: is a circuit diagram of a device for controlling an electric motor;

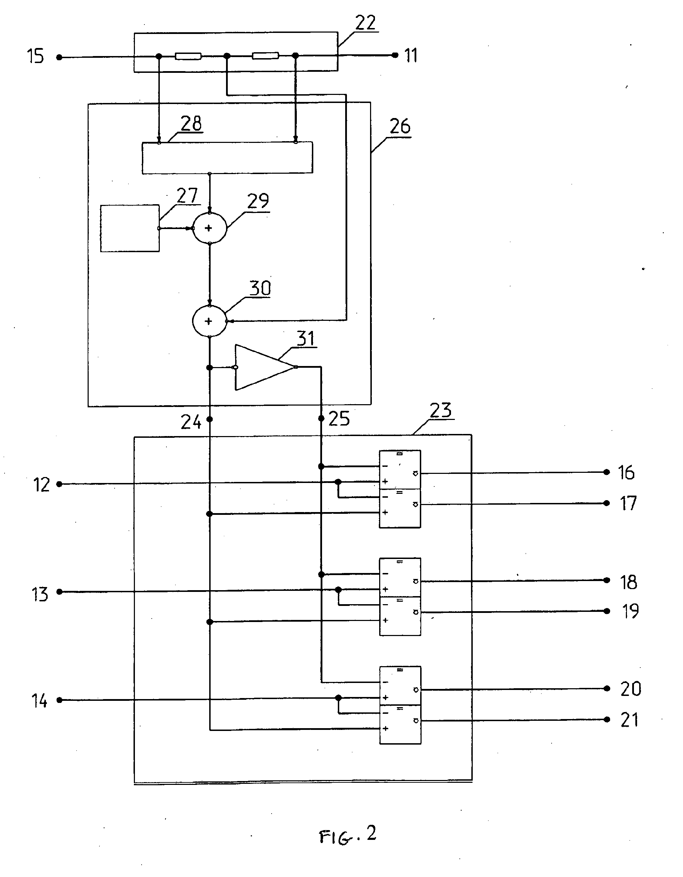

- Fig. 2: is a circuit diagram of a normalizer with a unit for shifting the reference level, and
- Fig. 3: is a diagram of the voltages of a section of a winding armature at the input of the normalizer.

The electric motor 1 has a permanent-magnet rotor 2, which performs the function of an inductor or a rotor 3 of soft magnetic material with an excitation winding 4. The sections of the winding armature 5, 6, 7 in a "star" formation are connected both to the outputs of a full-wave frequency converter 8 designed in the form of a three-phase bridge with bypass diodes and to the inputs 12, 13, 14 of a normalizer 9. The inputs 11 and 15 of the normalizer 9 are connected to a voltage source. The signals from the outputs 16, 17, 18, 19, 20, 21 of the normalizer 9 arrive at a microcontroller 10 which forms the controlling combinations for the frequency converter 8. The normalizer 9 comprises a divider 22 and a comparator unit 23 which has two reference level inputs 24 and 25. A unit 26 for shifting the reference level, which defines the thresholds of the comparators, is arranged between the divider 22 and the comparator unit 23.

The unit 26 for shifting the reference level comprises a current sensor 27, a voltage sensor 28, two adders 29 and 30 and an inverter 31. The inputs of the adder 29 are connected to the current sensor 27 and the voltage sensor 28, and the inputs of the adder 30 are connected to the output of the adder 29 and to the mid-point of the divider 22. The output of the adder 30 is connected to the reference level input 24 directly, and to the reference level input 25 by way of the inverter 31.

In the voltage diagram there are evident at the input of the normalizer 9:
- t the switch-off time from "+" of the power source,
- T the time interval during which the current flows in the previous direction under the action of the EMF of the self-induction by way of the bypass diode of the frequency converter 8,
- Segments ab and cd are intervals at which the voltage at the input of the normalizer 9 coincides with the back EMF of the section,
- U_{CM} voltage for shifting the reference level, formed by the unit for shifting the reference levels in a manner dependent upon the voltage Uₙᵤₘ and the load current,
- t1 the intersection time of the back EMF of the reference voltage level section corresponding to the angle α₀-n°,
- t2 the intersection time of the back EMF of section 6 with the zero level corresponding to the angle α₀,
- t3 the time of connecting section 6 to "-" of the power source,
- T1 the sum of the time for calculation of the switching time by the microcontroller and the delay of the normalizer filter,
- t4 the switching time in the absence of shifting, taking into consideration the armature reaction corresponding to the angle α₀+30°,
- t5 the time of disconnecting the section from "-" of the power source,
- t6 the time of connecting the section to "+" of the power source,
- T2 the maximum possible shifting of the switching times when calculating them with respect to the intersection time of the back EMF with the zero level section,
- T3 the maximum possible shifting of the switching times when calculating them with respect to the intersection time of the back EMF with the reference level section U_{CM}.

### Implementation of the invention applied for

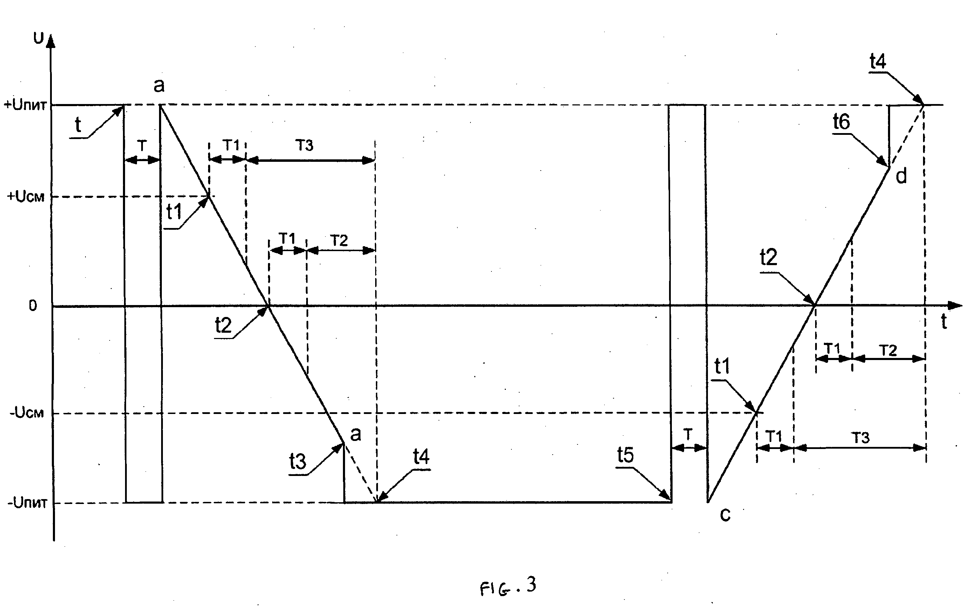

The method applied for of controlling an electric motor is carried out in the following way during the operation of the device: After the start of the electric motor in accordance with EMF signals in current-free sections of the armature winding the microcontroller 10 issues controlling combinations in a cyclical manner for 120° key switching to the full-wave frequency converter 8. The rotor 2 or 3 starts to rotate. In the output of the I^{th} control combination, the frequency converter 8 disconnects, for example, section 6 from "+" of the source at the moment in time t in Fig. 3. The normalizer 9, which includes a unit for shifting the reference level, converts the voltage sections 6 at the input 13 into discrete logic level signals at the outputs 18, 19. These signals arriving at the inputs of the microcontroller 10 contain the following information:
- Time T (Fig. 3) - the flow time of the current in the previous direction under the action of the EMF of the self-induction by way of the bypass diode of the frequency converter 8;
- Time instant t1 (Fig. 3) - the transition time of the EMF of the section disconnected from the voltage level source corresponding to the angle α₀-n° in a manner dependent upon the level U_{CM}.

The microcontroller 10 calculates the time for connecting the section 6 to "-" of the power source (the time of the output of the I+1^{th} combination), using the time period between the times t1, the transition of the EMF of the section disconnected from the voltage level source corresponding to the angle α₀-n°. The time T is used in order to allow for the reaction of the armature when determining the switching times. To this end the calculated time is shifted in magnitude in proportion to the time T. As is evident from Fig. 3, when calculating the switching times with respect to the intersection of the EMF with the zero free phase, the time t2 (the angle α₀), the interval T2 is the available switching range. This is linked to the fact that from 10 to 15 electrical degrees (the time T1)are involved in the delay of the normalizer filter and the time for the processor to calculate the switching times after the time t2.

In the method applied for, the interval T3 is the available switching range, since the delay of the filter and the calculation time are read off from the time t1 (the angle α₀-n°), and this makes it possible to achieve large shift angles of the switching times, which in turn allows the electric motor to be controlled with large distortion factors of the electromagnetic field.

The use of the present method of controlling an electric motor is particularly effective in systems where the length of the cable leading to the motor is substantial and varies within quite wide limits, for example in the recovery of oil by a submerged pump, the drive of which is in the form of a submerged electric motor, the control of which is carried out by an on-land control station which is positioned at a considerable distance from the borehole.

## Claims

1. A method of AC converter-fed motor control using star armature coils (5, 6, 7) connected to a full-wave frequency converter comprising a three-phase reverse diode bridge (8), the method comprising controlling start-up and rotation utilising EMF signals (ab; cd) induced in current-free armature coils (5, 6, 7) conditioned by a normalizer (9) and transformed to logical signals, and inputting the logical signals to a microcontroller (10) for effecting control according to an electrical motor mathematical model in which a switching time (t3; t6) for a current-free armature coil (5, 6, 7) is shifted with respect to a time (t1; t1) when an EMF signal (ab, cd) induced in the current-free armature coil (5, 6, 7) crosses a non-zero reference voltage level (+Ucm; -Ucm) that is earlier than the time (t2; t2) at which the EMF signal (ab; cd) crosses the zero voltage level and is compliant to the rotor angle specified for this kind of motor, wherein the shift of the shifted switching time (t3; t6) is determined in dependence on values of load current, rotor speed and armature coil inductance and wherein a time period (T) within which a current is transmitted under influence of the back-EMF over the frequency converter reverse diode following disconnection of the armature coil (5, 6, 7) from the power source is used for estimation of the load current, rotor speed and armature coil inductance values.

2. A method according to Claim 1 comprising:
determining the non-zero reference voltage level (+Ucm, -Ucm) from a first voltage level (+Unum) associated with the first output (15), a second voltage level (-Unum) associated with the second output (11) and the current supplied to the motor.

3. An AC converter-fed motor control device comprising a full-wave frequency converter comprising a three-phase reverse diode bridge (8), the device comprising means for controlling start-up and rotation utilising EMF signals (ab; cd) induced in current-free armature coils (5, 6, 7), a normalizer (9) conditioning and transforming the signals to logical signals, and a microcontroller (10) for receiving the logical signals and for effecting control according to an electrical motor mathematical model in which a shifted switching time (t3; t6) for a current-free armature coil (5, 6, 7) is determined by time shifting with respect to a time (t1; t1) when an EMF signal (ab; cd) induced in the current-free armature coil (5, 6, 7) crosses a non-zero reference voltage level (+Ucm; -Ucm) that is earlier than the time (t2; t2) at which the EMF signal crosses the zero voltage level and is compliant to the rotor angle specified for this kind of motor, wherein the shift of the switching time (t3; t6) is determined in dependence on values of the load current, rotor speed and armature coil inductance, wherein the time interval (T) within which a current is transmitted under influence of the back-EMF over the frequency converter reverse diode following disconnection of the armature coil (5, 6, 7) from the power source is used for estimation of the load current, rotor speed and armature coil inductance values.

4. A device according to Claim 3, wherein the normalizer (9) comprises two reference inputs (15, 11).

5. A device according to Claim 3 or 4, wherein a reference level shift block (26) is provided between a divider (22) and a comparator block (23).

6. A device according to Claim 5, wherein the reference level shift block (26) comprises a current sensor (27) and a voltage sensor (28).

7. A device according to Claim 5 or 6, wherein the reference level shift block (26) comprises adding means (29, 30) and an inverter (31).

8. A device according to Claim 7, wherein the adding means (29, 30) includes a first adder (29) having inputs connected to the current and voltage sensors (27, 28).

9. A device according to Claim 8, wherein the adding means (29, 30) includes a second adder (30) having inputs connected to the first adder output and to the divider midpoint.

10. A device according to Claim 9, wherein the second adder output is connected to first reference level input directly and to the second reference level input by way of the inverter (31).

## Patentansprüche

1. Verfahren zum Steuern eines über AC-Wandler gespeisten Motors unter Verwendung von sternförmigen Ankerspulen (5, 6, 7), die mit einem Ganzwellen-Frequenzwandler verbunden sind, der eine dreiphasige Rückspeisdiodenbrücke (8) umfasst, wobei das Verfahren das Steuern eines Anlaufens und einer Drehung unter Verwendung von in stromfreien Ankerspulen (5, 6, 7) induzierten EMK-Signalen (ab; cd), die von einem Normalisator (9) konditioniert und in logische Signale umgewandelt werden, und das Einspeisen der logischen Signale in eine Mikrosteuereinheit (10) umfasst, um eine Steuerung gemäß einem mathematischen Elektromotor-Modell zu bewirken, wobei eine Schaltzeit (t3; t6) für eine stromfreie Ankerspule (5, 6, 7) in Bezug auf eine Zeit (t1; t1) verschoben wird, wenn ein in der stromfreien Ankerspule (5, 6, 7) induziertes EMK-Signal (ab, cd) eine Referenz-Nullspannungshöhe (+Ucm; -Ucm) kreuzt, die früher als die Zeit (t2; t2) ist, bei der das EMK-Signal (ab; cd) die Nullspannungshöhe kreuzt und dem Rotorwinkel entspricht, der für diese Art von Motor festgelegt ist, wobei die Verschiebung der verschobenen Schaltzeit (t3: t6) abhängig von Werten eines Laststroms, einer Rotordrehzahl und einer Ankerspuleninduktanz bestimmt wird, und wobei ein Zeitraum (T), innerhalb welches ein Strom unter Einfluss der Rück-EMK über die Frequenzwandler-Rückspeisdiode nach Trennung der Ankerspule (5, 6, 7) von der Energiequelle übertragen wird, für eine Schätzung der Laststrom-, Rotordrehzahl- und Ankerspuleninduktanzwerte verwendet wird.

2. Verfahren nach Anspruch 1, das umfasst:
Bestimmen der Referenz-Nullspannungshöhe (+Ucm, -Ucm) anhand einer ersten Spannungshöhe (+Unum), die mit dem ersten Ausgang (15) assoziiert ist, einer zweiten Spannungshöhe (-Unum), die mit dem zweiten Ausgang (11) assoziiert ist, und dem zum Motor gespeisten Strom.

3. Einheit zum Steuern eines über AC-Wandler gespeisten Motors, die einen Ganzwellen-Frequenzwandler umfasst, der eine dreiphasige Rückspeisdiodenbrücke (8) umfasst, wobei die Einheit ein Mittel zum Steuern eines Anlaufens und einer Drehung unter Verwendung von in stromfreien Ankerspulen (5, 6, 7) induzierten EMK-Signalen, einen Normalisator (9) zum Konditionieren und Umwandeln der Signale in logische Signale und eine Mikrosteuereinheit (10) zum Empfangen der logischen Signale und zum Bewirken einer Steuerung gemäß einem mathematischen Elektromotor-Modell umfasst, wobei eine verschobene Schaltzeit (t3; t6) für eine stromfreie Ankerspule (5, 6, 7) durch eine Zeitverschiebung in Bezug auf eine Zeit (t1; t1) bestimmt wird, wenn ein in der stromfreien Ankerspule (5, 6, 7) induziertes EMK-Signal (ab; cd) eine Referenz-Nullspannungshöhe (+Ucm; -Ucm) kreuzt, die früher als die Zeit (t2; t2) ist, bei der das EMK-Signal die Nullspannungshöhe kreuzt und dem Rotorwinkel entspricht, der für diese Art von Motor festgelegt ist, wobei die Verschiebung der Schaltzeit (t3: t6) abhängig von Werten des Laststroms, der Rotordrehzahl und der Ankerspuleninduktanz bestimmt wird, wobei der Zeitraum (T), innerhalb welches ein Strom unter Einfluss der Rück-EMK über die Frequenzwandler-Rückspeisdiode nach Trennung der Ankerspule (5, 6, 7) von der Energiequelle übertragen wird, für eine Schätzung der Laststrom-, Rotordrehzahl- und Ankerspuleninduktanzwerte verwendet wird.

4. Einheit nach Anspruch 3, wobei der Normalisator (9) zwei Referenzeingänge (15, 11) umfasst.

5. Einheit nach Anspruch 3 oder 4, wobei ein Referenzhöhenverschiebeblock (26) zwischen einem Teiler (22) und einem Komparatorblock (23) bereitgestellt ist.

6. Einheit nach Anspruch 5, wobei der Referenzhöhenverschiebeblock (26) einen Stromsensor (27) und einen Spannungssensor (28) umfasst.

7. Einheit nach Anspruch 5 oder 6, wobei der Referenzhöhenverschiebeblock (26) ein Additionsmittel (29, 30) und einen Wechselrichter (31) umfasst.

8. Einheit nach Anspruch 7, wobei das Additionsmittel (29, 30) einen ersten Addierer (29) mit Eingängen enthält, die mit den Strom- und Spannungssensoren (27, 28) verbunden sind.

9. Einheit nach Anspruch 8, wobei das Additionsmittel (29, 30) einen zweiten Addierer (30) mit Eingängen enthält, die mit dem Ausgang des ersten Addierers und dem Mittelpunkt des Teilers verbunden sind.

10. Einheit nach Anspruch 9, wobei der Ausgang des zweiten Addierers direkt mit dem ersten Referenzhöheneingang und über den Wechselrichter (31) mit dem zweiten Referenzhöheneingang verbunden ist.

## Revendications

1. Procédé de commande de moteur alimenté par un convertisseur CA utilisant des bobines d'induit en étoile (5, 6, 7) connectées à un convertisseur de fréquence à double alternance comprenant un pont redresseur triphasé (8), le procédé comprenant les étapes consistant à commander un démarrage et une rotation en utilisant des signaux de FEM (ab ; cd) induits dans les bobines d'induit sans courant (5, 6, 7) conditionnées par un normalisateur (9) et transformées en signaux logiques, et fourni en entrée les signaux logiques à un microcontrôleur (10) pour mettre en oeuvre une commande selon un modèle mathématique de moteur électrique dans lequel un temps de commutation (t3 ; t6) pour une bobine d'induit sans courant (5, 6, 7) est décalé par rapport à un temps (t1 ; t1) lorsqu'un signal de FEM (ab, cd) induit dans la bobine d'induit sans courant (5, 6, 7) passe par un niveau de tension de référence non nul (+Ucm ; -Ucm) qui est antérieur au temps (t2 ; t2) auquel le signal de FEM (ab ; cd) passe par le niveau de tension nul et est conforme à l'angle de rotor spécifié pour ce type de moteur, le décalage du temps de commutation décalé (t3 ; t6) étant déterminé en fonction des valeurs de courant de charge, de vitesse de rotor et d'inductance de bobine d'induit et une période de temps (T) au sein de laquelle un courant est transmis sous l'influence de la force contre-électromotrice par le pont redresseur du convertisseur de fréquence suite à la déconnexion de la bobine d'induit (5, 6, 7) de la source d'alimentation étant utilisée pour une estimation des valeurs de courant de charge, de vitesse de rotor et d'inductance de bobine d'induit.

2. Procédé selon la revendication 1, comprenant les étapes consistant à :
déterminer le niveau de tension de référence non nul (+Ucm, -Ucm) à partir d'un premier niveau de tension (+Unum) associé à la première sortie (15), un second niveau de tension (-Unum) associé à la seconde sortie (11) et le courant fourni au moteur.

3. Dispositif de commande de moteur alimenté par convertisseur CA comprenant un convertisseur de fréquence à double alternance comprenant un pont redresseur triphasé (8), le dispositif comprenant un moyen permettant de commander un démarrage et une rotation en utilisant des signaux de FEM (ab ; cd) induits dans des bobines d'induit sans courant (5, 6, 7), un normalisateur (9) conditionnant et transformant les signaux en signaux logiques, et un microcontrôleur (10) pour recevoir les signaux logiques et pour mettre en oeuvre une commande selon un modèle mathématique de moteur électrique dans lequel un temps de commutation décalé (t3 ; t6) pour une bobine d'induit sans courant (5, 6, 7) est déterminé par décalage temporel par rapport à un temps (t1 ; t1) où un signal de FEM (ab ; cd) induit dans la bobine d'induit sans courant (5, 6, 7) passe par un niveau de tension de référence non nul (+Ucm ; -Ucm) qui est antérieur au temps (t2 ; t2) où le signal de FEM passe par le niveau de tension nul et est conforme à l'angle de rotor spécifié pour ce type de moteur, le décalage du temps de commutation (t3 ; t6) étant déterminé en fonction des valeurs de courant de charge, de vitesse de rotor et d'inductance de bobine d'induit, l'intervalle de temps (T) au sein duquel un courant est transmis sous l'influence de la force contre-électromotrice par le pont redresseur du convertisseur de fréquence suite à une déconnexion de la bobine d'induit (5, 6, 7) de la source d'alimentation étant utilisé pour une estimation des valeurs de courant de charge, de vitesse de rotor et d'inductance de bobine d'induit.

4. Dispositif selon la revendication 3, dans lequel le normalisateur (9) comprend deux entrées de référence (15, 11).

5. Dispositif selon la revendication 3 ou 4, dans lequel un bloc de décalage de niveau de référence (26) est fourni entre un diviseur (22) et un bloc comparateur (23).

6. Dispositif selon la revendication 5, dans lequel le bloc de décalage de niveau de référence (26) comprend un détecteur de courant (27) et un détecteur de tension (28).

7. Dispositif selon la revendication 5 ou 6, dans lequel le bloc de décalage de niveau de référence (26) comprend un moyen d'addition (29, 30) et un onduleur (31).

8. Dispositif selon la revendication 7, dans lequel le moyen d'addition (29, 30) inclut un premier sommateur (29) présentant des entrées connectées aux détecteurs d'intensité et de tension (27, 28).

9. Dispositif selon la revendication 8, dans lequel le moyen d'addition (29, 30) inclut un second sommateur (30) présentant des entrées connectées à la sortie du premier sommateur et au point médian du diviseur.

10. Dispositif selon la revendication 9, dans lequel la sortie du second sommateur est connectée à la première entrée de niveau de référence de manière directe et à la seconde entrée de niveau de référence par l'intermédiaire de l'onduleur (31).
